# EUROPEAN PATENT SPECIFICATION

(11) **EP 2 313 329 B1**
(45) Date of publication and mention of the grant of the patent: **25.06.2014**
(21) Application number: 09772628.5
(22) Date of filing: 30.06.2009
(51) Int. Cl.: B65D 88/26, B65D 90/02, B65D 90/46

(54) **CONTAINER WITH ANTISTATIC LAYER**
BEHÄLTER MIT ANTISTATIKSCHICHT
CONTENANT POURVU D'UNE COUCHE ANTISTATIQUE

(30) Priority: 30.06.2008 FI 20085672
(43) Date of publication of application: 27.04.2011
(73) Proprietor: Uponor Infra Oy, 01510 Vantaa (FI)
(72) Inventor: JANSSON, Patrick, 65101 Vaasa (FI)
(74) Representative: Sundman, Patrik Christoffer
(86) International application number: PCT/FI2009/050594
(87) International publication number: WO 2010/000941

(56) References cited:
- WO-A-03/028980
- DE-A1- 19 831 898
- US-A- 5 127 442

## Description

The present invention concerns a container according to the preamble of claim 1 for dry powders, granules, pellets, gas and other ignitable substances.

A container of this kind typically comprises a cylindrically shaped wall with end closures, at opposite ends of the wall, said wall and end closures defining a closed space.

The present invention also concerns a method of producing a container according to the preamble of claim 10.

Large vessels in the form of tanks and silos are commonly used for permanent or intermediate storage of bulk materials, such as dry powders, granules and pellets. They can also be used for storing liquids and gases. Typically, the volumes of the tanks and silos are from 100 to 5,000 hectolitres or even more.

A container with the features in the preamble of claim 1 is disclosed in document WO-A-03 028 980.

In some industrial processes there is a risk for generation of static charges in the storage units of the processing equipment. Thus, static charges can result in adherence of particles to the walls of containers, and if charges accumulate there is a risk of ignition of any flammable material stored in the tanks. This phenomenon is normally called dust explosion.

Polyolefins, such as polyethylene (PE) and polypropylene (PP), and poly(vinyl chloride) (PVC) and similar thermoplastics, are inexpensive materials which are used in many industrial applications and which have been employed for the manufacture of storage silos and tanks of the above kind. Being non-conductive materials conventional thermoplastics are, however, not suited for applications where there is a risk of static charge generation of the afore-mentioned kind.

It is an aim of the present invention to eliminate at least some of the problems of the art and to provide a novel container structure for storing of easily ignitable materials.

The present invention is based on the idea of providing a container having a conductive (including dissipative) thermoplastic wall by spirally winding a pipe, which has a surface layer which is electrically conductive, to form a cylindrical wall section of the container. The pipe used comprises at least a first, inner layer which is non-conductive and which has good mechanical properties and at least a second, outer layer which is conductive, the two polymer materials being co-extrudable.

More specifically, a container according to the present invention is mainly characterized by what is stated in the characterizing part of claim 1.

The method according to the invention is characterized by what is stated in the characterizing part of claim 9.

Considerable advantages are obtained by the present invention. Thus, by using at least two materials, the core/inner layer, which is made of a conventional thermoplastic material, such as ordinary PE-HD for example, has better mechanical properties than the filled outer layer material. These mechanical properties are internal pressure resistance, long-term high modulus, excellent FNCT and good tensile yield properties.

On the other hand, in view of the good mechanical strength provided by the inner layer, the outer layer need not meet stringent requirements on, e.g., pressure grade classification. Since the material is thermoplastic it can still be conventionally welded which makes it possible to build up a container with a multiple layer pipe coiled as a structural wall pipe. This concept benefits the end customer as a more cost efficient solution than competing solutions.

Accumulation of electric charges inside the container can be efficiently avoided.

Next, the invention will be examined more closely with the aid of the attached drawings.
Figure 1 shows in a perspective depiction a structured-wall pipe made of polyethylene with an inner layer of conventional thermoplastic material on the inside and an antistatic/conductive polymer on the outside, and
Figure 2 shows in a section the schematic structure of a silo according to the present invention, which a conical end at the bottom inside the cylindrical wall.

The term "profile" is used herein interchangeably with "tube" (or pipe) (i.e. an elongated object having an open cross-section). "Open" stands for any geometrical shape or shapes. Typically, the cross-section of the particularly preferred materials is, or at least a part of the cross-section is, rectangular or essentially rectangular, but it can also be spherical or elliptical. The open cross-section can be formed by one or several geometrical shapes of the afore-mentioned kind.

"Structured-wall" stands for a wall built up by a spirally wound tube, thus comprising a non-solid wall which is lighter than a solid wall but still as strong.

"Lightweight" when used in connection with the wall of the container indicates that the structured wall is formed from a tube or profile having an open cross-section.

According to the invention, a cylindrical lightweight wall structure is formed from a tube comprising co-extruded materials of the afore-mentioned kind, by spirally winding the tube. In the spirally wound tube, a part of the outer surface of the second layer forms the outer surface of thin container and another part the inner surface thereof.

When the multiple layer profile is coiled, the individual windings are fixed to each other to form the tank wall.

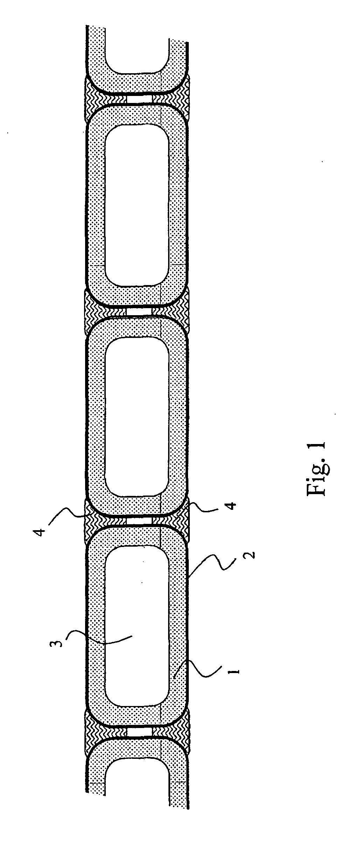

Figure 1 shows the cross-section of a wall formed as explained above. Thus, a large sized lightweight thermoplastics tube is manufactured by spirally winding a thermoplastics hollow profile 1-3 having a substantially rectangular cross section around a cylindrical rotating drum and joining adjacent rounds of this hollow profile 1-3 together by welding 4, whereby a light-weight tube is achieved comprising an outer wall 2 and an inner wall 1 as well as spirally extending partition wall 4 connecting the aforementioned walls, between which walls there is a similarly spirally extending channel 3.

Typically the thermoplastic profile is spirally wound around a cylindrical rotating drum or a corresponding support and the adjacent rounds of the tube are joined together for instance by welding.

Plastic tubes and pipes formed by spiral winding of hollow sections or profiles and methods of manufacturing such tubes and pipes as well as methods of joining them are described in US Patent Specifications Nos. 5,127,442, 5,411,619, 5,431,762, 5,591,292, 6,322,653 and 6,939,424. Methods of manufacturing container end walls of lightweight construction are disclosed in 6,666,945 and 7,347,910.

The thermoplastic profile (reference numerals 1-3 in Figure 1) has a plurality of layers, typically 2 to 5 layers, one of which forms the inner layer and one the outer layer of the profile, as explained above. The inner layer of the profiles can be made of a polyolefin, such as polyethylene, in particular HD-PE or polypropylene, poly(acrylonitrile butadiene styrene) (ABS), polyamide (PA), polycarbonate or some other thermoplastic material.

The outer layer, which surrounds the core layer, is antistatic. It consists of a thermoplastic material made permanently conductive. The thermoplastic material can be the same as or different from the one of the first layer. Thus, the outer layer can be made of a polyolefin, such as polyethylene (e.g. HD-PE) or polypropylene, poly(acrylonitrile butadiene styrene), polyamide, polycarbonate, or some other thermoplastic material. Naturally, by selecting the same or similar thermoplastic materials for both layers, good compatibility between the layers can be attained.

Properties of electrical conductivity can be obtained by blending the polymer material with conductive particles, such as fillers comprising carbon black or metal particles, conductive fibres or nanocomposites, including conductive carbon nanotubes. The layer may also contain, optionally and preferably in combination with the above conductive particles or fibres, inherently conductive polymers (ICPs), such as polyacetylene, polythiophene, polyaniline or polypyrrole, or ionomers containing alkaline and/or earth alkaline metal ions or mixtures thereof. Preferably, the material has a surface resistivity in the conductive range, in particular the surface resistivity is from 1 to 10⁶ohm/sq (ASTM D-257), in particular about 1 to 10⁵ohm/sq.

The thickness ratios between the first and the second layers are typically in the range of 1:50 to 50 to 1, for example about 1:20 to 20:1, in particular about 1:15 to 15:1. In a preferred embodiment, the inner layer is at least as thick as the outer layer or, at maximum about 10 times as thick as the outer layer.

Optionally, one or more adhesive layer can be included between the layers. Between the core/inner layer and the antistatic/conductive layer it is also possible to add at least one barrier layer improving the barrier to liquid or gas, to hydrophobic or hydrophilic materials. According to one embodiment, the barrier layer comprises or consists of an ethylene vinyl alcohol polymer (EVOH). This kind of barrier layer is used for preventing diffusion of highly volatile hydrocarbons.

Polyethylene or any other thermoplastics of the above-mentioned kind gives the container good mechanical properties.

It is preferred to have a surface material (i.e. an outer layer of the tube) with mechanical properties, especially the ESCR value need to be on a certain level. For this reason, according to a particularly preferred embodiment, the outer layer is produced from a thermoplastic of the same or similar kind as the inner layer, the outer layer being made conductive by the addition of a permanently antistatic/conductive additive.

The total wall thickness of the material is about 1 to 20 mm, in particular about 1 to 10 mm.

The profiles are welded using the outer layer material as welding material 4. The joints are thus leak-free and the tank will have 100 % of its area covered by same material as the surrounding. Due to the design of the structured-wall pipe and rigid end caps, the tank has good resistance to external pressure, which is important in buried installations.

When the adjacent windings of the pipe are properly attached to each other the form not only a wall which is at least essentially impermeable to granules or powders, preferably it is impermeable to powders, gases and liquids, but also a homogeneously conductive surface on both the inner and the outer side of the container. Further, conductive bridges between the inner and outer surfaces of the container wall are formed by the material in the adjacent windings.

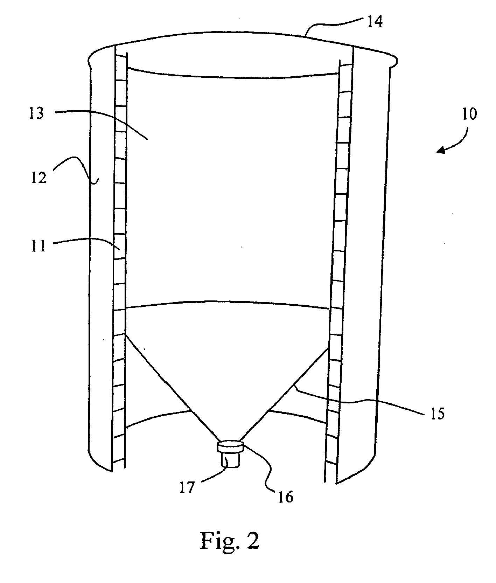

Figure 2 shows one embodiment of a container according to the present invention. Thus, as discussed above, a container 10 of the present kind for storing of dry material, gas or liquid materials comprises a cylindrical wall 12 formed by a multilayered tube. The profile is produced by conventional extrusion processing, i.e. co-extrusion of a multiple layered profile. As result, the profile comprises a multilayered tubular structure with an inner tubular layer of a first thermoplastic material and an outer tubular layer of second, conductive thermoplastic material. The two thermoplastic materials define a hollow interior section 11.

The container 10 has end closures 14, 15 at one or preferably both ends of the cylindrical wall. To achieve a fully working system it is necessary that these end caps also have at least one integral layer which is permanently antistatic/conductive.

The end caps can be produced from a solid thermoplastic which has been made antistatic or conductive as described above by adding a suitable conductive component into the material.

According to one interesting embodiment, at least one of the end caps of the container is formed by multilayered thermoplastic material, comprising one antistatic or conductive layer. According to a preferred embodiment of this kind, the cap is formed by a structured wall which is produced by welding together hollow tubes of the above-mentioned kind.

The end caps can be flat, concave 14 or convex or even conical 15, as will be explained below. They can be fixed to the wall by welding in the same way as when the structured wall is built up. It is preferred to have rigid end caps.

In particular when the cylindrical part of the container is at least essentially vertical, the lower end closure can be formed into a cone 15 and provided with a valve 16 for regulating withdrawal of the material stored in the container through the outlet 17.

When installed, the system has to be grounded. To this end, it is preferred to have some electrical wiring embedded in the outer layer of at least one end of the cylindrical wall.

This tank/silo can be placed standalone on ground, either horizontally or vertically, or in some installations it may also be placed below ground surface. If the tank is buried in the earth, it will give the additional benefit of good ring-stiffness ratio versus weight and it will also handle earth movements better because of very flexible material properties. Corrosion free and good chemical properties are other advantages of these materials.

This tank/silo can also work as drier for material/powder/pellets. When using structural walls it may handle internal vacuum better than solid walls. This vacuum could be applied together with heat to the tank/silo to form a functional, big scale vacuum drier.

The tank/silo volumes are normally in the range from 2 to 100 cubic metres. The structured-wall pipe may be manufactured from 315 mm to 3000 mm as outside diameter.

## Claims

1. A container (10) for dry powders, granules, pellets, gas and other ignitable substances, comprising
- a wall (1-3; 11-13) formed by a spirally wound profile having an open cross-section, wherein adjacent windings of the profile are attached to each other,
**characterized in that**
- the profile comprises a first thermoplastic layer forming the inner surface (1; 11) of the profile and a second thermoplastic layer (2; 12) placed about the first thermoplastic layer and forming the outer surface of the pipe, said second layer being antistatic, adjacent windings of the profile being welded (4) to each other.

2. The container according to claim 1, wherein the first thermoplastic layer (1; 11) is a polymeric material selected from the group of polyolefins, polyamides, poly(vinyl chloride) and poly(acrylonitrile butadiene styrene).

3. The container according to claim 1 or 2, wherein the second thermoplastic layer (2; 12) is electrically conductive having a resistance in the conductive range.

4. The container according to any of claims 1 to 3, wherein the second thermoplastic layer (2; 12) contains electrically conductive or dissipating particles, fibres, tubes or polymers or mixtures thereof.

5. The container according to claim 4, wherein the second thermoplastic layer (2; 12) is a polymeric material selected from the group of polyolefins, polyamides, poly(vinyl chloride) and poly(acrylonitrile butadiene styrene).

6. The container according to claim 4, wherein the second thermoplastic layer (2; 12) consists of a polymer material made permanently conductive by blending the polymer material with conductive particles, conductive fibres, conductive nanocomposites or conductive polymers, or mixtures thereof.

7. The container according to any of the preceding claims, wherein there are 1 to 3 intermediate layers placed between the inner layer and the outer layer, said layers being selected from adhesive layers and barrier layers.

8. The container according to any of the preceding claims, wherein the profile windings are welded (4) together so as to form an essentially homogeneously conductive surface on both the inner and the outer side of the wall, with conductive bridges between the inner and the outer surfaces of the container wall being formed by the material in the adjacent windings.

9. A method of producing a container for storing dry powders, granules, pellets, gas and other ignitable substances, comprising the steps of
- providing a lightweight profile (1-3; 11-13) having an open cross-section,
- coiling the profile to form a cylindrical wall and
- welding adjacent profile windings to each other,
**characterized in that**
- the step of providing the profile comprises co-extruding a first thermoplastic layer 1; 11) which forms the inner surface of the profile and a second thermoplastic layer (2; 12) forming the outer surface of the profile, said second layer being antistatic.

10. The method according to claim 9, wherein the second thermoplastic layer (2; 12) consists of a polymer material made permanently conductive by blending the polymer material with conductive particles, conductive fibres, conductive nanocomposites or conductive polymers, or mixtures thereof.

11. The method according to claim 9 or 10, wherein the pipe's windings are welded together so as to form an essentially homogeneously conductive surface on both the inner and the outer side of the wall, with conductive bridges (4) between the inner and the outer surface of the container wall being formed by the material in the adjacent windings.

12. The use of a container according to any of claims 1 to 8 as a drier for material/powder/pellets.

## Patentansprüche

1. Ein Behälter (10) für trockene Pulver, Granulate, Pellets, Gas und andere zündfähige Substanzen, umfassend:
- eine Wand (1-3; 11-13), die durch ein spiralförmig gewundenes Profil mit einem offenen Querschnitt gebildet wird, wobei benachbarte Windungen des Profils miteinander verbunden sind,
**dadurch gekennzeichnet, dass** s
- das Profil eine erste thermoplastische Schicht, die die Innenfläche (1; 11) des Profils bildet, und eine zweite thermoplastische Schicht (2; 12), die auf der ersten thermoplastischen Schicht angeordnet ist und die äußere Oberfläche des Rohres bildet, umfasst, wobei die zweite Schicht antistatisch ist und benachbarte Windungen des Profils miteinander verschweißt (4) sind.

2. Der Behälter gemäß Anspruch 1, wobei die erste thermoplastische Schicht (1; 11) ein polymeres Material, ausgewählt aus der Gruppe von Polyolefinen, Polyamiden, Poly(vinylchlorid) und Poly(acrylnitril-butadien-styrol) ist.

3. Der Behälter gemäß Anspruch 1 oder 2, wobei die zweite thermoplastische Schicht (2; 12) elektrisch leitfähig ist und einen Widerstand im leitenden Bereich aufweist.

4. Der Behälter gemäß einem der Ansprüche 1 bis 3, wobei die zweite thermoplastische Schicht (2; 12) elektrisch leitfähige oder abführende Teilchen, Fasern, Röhrchen oder Polymere oder deren Mischungen enthält.

5. Der Behälter gemäß Anspruch 4, wobei die zweite thermoplastische Schicht (2; 12) ein polymeres Material, ausgewählt aus der Gruppe von Polyolefinen, Polyamiden, Poly(vinylchlorid) und Poly(acrylnitril-butadien-styrol) ist.

6. Der Behälter gemäß Anspruch 4, wobei die zweite thermoplastische Schicht (2; 12) aus einem Polymermaterial besteht, das durch Mischen des Polymermaterials mit leitfähigen Partikeln, leitfähigen Fasern, leitfähigen Nanocompositen oder leitfähigen Polymeren oder Mischungen davon dauerhaft leitfähig gemacht ist.

7. Der Behälter gemäß einem der vorhergehenden Ansprüche, wobei es 1 bis 3 Zwischenschichten gibt, die zwischen der inneren Schicht und der äußeren Schicht angeordnet sind, wobei die Schichten ausgewählt sind aus Haftschichten und Sperrschichten.

8. Der Behälter gemäß einem der vorhergehenden Ansprüche, wobei die Profilwindungen miteinander verschweißt (4) sind, um eine im wesentlichen homogen leitfähige Oberfläche sowohl auf der Innen- als auch auf der Außenseite der Wand zu bilden, wobei leitfähige Brücken zwischen den inneren und den äußeren Oberflächen der Behälterwand durch das Material in den benachbarten Windungen gebildet sind.

9. Ein Verfahren zur Herstellung eines Behälters zur Lagerung von trockenen Pulvern, Granulaten, Pellets, Gas und anderen zündfähigen Substanzen, umfassend die Schritte
- Bereitstellen eines Leichtbauprofils (1-3; 11-13) mit einem offenen Querschnitt,
- Aufwickeln des Profils, um eine zylindrische Wand zu bilden und
- miteinander Verschweißen benachbarter Profilwindungen,
**dadurch gekennzeichnet, dass**
- der Schritt des Bereitstellens des Profils das Coextrudieren einer ersten thermoplastischen Schicht (1; 11), die die Innenfläche des Profils bildet, und einer zweiten thermoplastischen Schicht (2; 12), die die äußere Oberfläche des Profils bildet, umfasst, wobei die zweite Schicht antistatisch ist.

10. Das Verfahren gemäß Anspruch 9, wobei die zweite thermoplastische Schicht (2; 12) aus einem Polymermaterial besteht, das durch Mischen des Polymermaterials mit leitfähigen Partikeln, leitfähigen Fasern, leitfähigen Nanocompositen oder leitfähigen Polymeren oder Mischungen davon dauerhaft leitfähig gemacht ist.

11. Das Verfahren gemäß Anspruch 9 oder 10, wobei die Windungen des Rohres miteinander verschweißt werden, um eine im wesentlichen homogen leitfähige Oberfläche sowohl auf der Innen- als auch auf der Außenseite der Wand zu bilden, wobei leitfähige Brücken (4) zwischen der inneren und der äußeren Oberfläche der Behälterwand durch das Material in den benachbarten Windungen gebildet werden.

12. Die Verwendung eines Behälters gemäß einem der Ansprüche 1 bis 8 als Trockner für ein Material/Pulver/Pellets.

## Revendications

1. Contenant (10) pour poudres sèches, granules, boulettes, gaz et autres substances inflammables, comprenant
- une paroi (1-3 ; 11-13) formée par un profil enroulé en spirale ayant une section ouverte, dans lequel des enroulements adjacents du profil sont attachés les uns aux autres, **caractérisé en ce que**
- le profil comprend une première couche thermoplastique formant la surface interne (1 ; 11) du profil et une seconde couche thermoplastique (2 ; 12) placée autour de la première couche thermoplastique et formant la surface externe du tuyau, ladite seconde couche étant antistatique, des enroulements adjacents du profil étant soudés (4) les uns aux autres.

2. Contenant selon la revendication 1, dans lequel la première couche thermoplastique (1 ; 11) est un matériau polymérique choisi dans le groupe des poly(oléfines), poly(amides), poly(chlorure de vinyle) et poly(acrylonitrile-butadiène-styrène).

3. Contenant selon la revendication 1 ou 2, dans lequel la seconde couche thermoplastique (2 ; 12) est électriquement conductrice ayant une résistance dans la plage conductrice.

4. Contenant selon l'une quelconque des revendications 1 à 3, dans lequel la seconde couche thermoplastique (2 ; 12) contient des particules, fibres, tubes ou polymères électriquement conducteurs ou dissipateurs ou des mélanges de ceux-ci.

5. Contenant selon la revendication 4, dans lequel la seconde couche thermoplastique (2 ; 12) est un matériau polymérique choisi dans le groupe des poly(oléfines), poly(amides), poly(chlorure de vinyle) et poly(acrylonitrile-butadiène-styrène).

6. Contenant selon la revendication 4, dans lequel la seconde couche thermoplastique (2 ; 12) consiste en un matériau polymère rendu conducteur en permanence en mélangeant le matériau polymère avec des particules conductrices, des fibres conductrices, des nanocomposites conducteurs ou des polymères conducteurs, ou des mélanges de ceux-ci.

7. Contenant selon l'une quelconque des revendications précédentes, dans lequel 1 à 3 couches intermédiaires sont placées entre la couche interne et la couche externe, lesdites couches étant choisies parmi les couches adhésives et les couches barrière.

8. Contenant selon l'une quelconque des revendications précédentes, dans lequel les enroulements de profil sont soudés (4) ensemble de façon à former une surface conductrice de manière essentiellement homogène sur à la fois le côté interne et le côté externe de la paroi, des ponts conducteurs entre la surface interne et la surface externe de la paroi de contenant étant formés par le matériau dans les enroulements adjacents.

9. Procédé de production d'un contenant permettant de stocker des poudres sèches, granules, boulettes, gaz et autres substances inflammables, comprenant les étapes de
- fourniture d'un profil léger (1-3 ; 11-13) ayant une section ouverte,
- embobinage du profil pour former une paroi cylindrique et
- soudage des enroulements de profil adjacents les uns aux autres,
**caractérisé en ce que**
- l'étape de fourniture du profil comprend la coextrusion d'une première couche thermoplastique (1 ; 11) qui forme la surface interne du profil et d'une seconde couche thermoplastique (2 ; 12) formant la surface externe du profil, ladite seconde couche étant antistatique.

10. Procédé selon la revendication 9, dans lequel la seconde couche thermoplastique (2 ; 12) consiste en un matériau polymère rendu conducteur en permanence en mélangeant le matériau polymère avec des particules conductrices, des fibres conductrices, des nanocomposites conducteurs ou des polymères conducteurs, ou des mélanges de ceux-ci.

11. Procédé selon les revendications 9 ou 10, dans lequel les enroulements de tuyaux sont soudés ensemble de façon à former une surface conductrice de manière essentiellement homogène sur à la fois le côté interne et le côté externe de la paroi, des ponts conducteurs (4) entre la surface interne et externe de la paroi du contenant étant formés par le matériau dans les enroulements adjacents.

12. Utilisation d'un contenant selon l'une quelconque des revendications 1 à 8, comme séchoir pour un matériau/une poudre/des boulettes.
